# EUROPEAN PATENT SPECIFICATION

(11) **EP 0 694 095 B1**
(45) Date of publication and mention of the grant of the patent: **05.03.1997**
(21) Application number: 93910975.7
(22) Date of filing: 23.04.1993
(51) Int. Cl.: D06N 7/00, B29C 44/00, B05D 1/40, B05C 9/14, B05C 11/02

(54) **METHOD AND APPARATUS FOR PREPARING A FIBROUS BATT**
VERFAHREN UND APPARAT ZUR HERSTELLUNG EINES BESCHICHTETEN FASERGEBILDES
PROCEDE ET APPAREIL DE PREPARATION D'UN PANNEAU FIBREUX

(43) Date of publication of application: 31.01.1996
(73) Proprietor: Schuller International, Inc., Denver, Colorado 80202 (US)
(72) Inventor: MORTON, Keith, L., Greenville, SC 29605 (US)
(74) Representative: Grättinger & Partner
(86) International application number: US9304119
(87) International publication number: WO9425664

(56) References cited:
- DE-A- 1 427 602
- FR-A- 2 518 139
- US-A- 3 398 224
- US-A- 3 607 341
- US-A- 4 162 342
- US-A- 4 618 530

## Description

### Field Of The Invention

This invention concerns fibrous batts of thermal insulation and more particularly concerns a method and apparatus for producing a smooth, tough elastomeric coating over one surface of a fibrous batt.

### Description Of The Prior Art

Fibrous batts of glass fibers are employed as thermal insulation and acoustical insulation in a variety of products, for example, ventilation duct-liners, automotive hood lid liners, et cetera. Tough, elastomeric coatings are applied to the exposed surface of such fibrous batts in order to retard separation of fibers and to reduce air friction losses in ducts which are lined with such batts. The coatings also increase the ease of handling the batts.

Typically such batts are coated on one surface with an elastomeric aqueous cross-linkable emulsion composition such as an acrylic emulsion which is heat cured after application. Such elastomeric cross-linkable compositions have been frothed or foamed in order to provide uniform coating of the exposed surface of the batt over the irregular and uneven surface of the batt. During thermal exposure such emulsion coating compositions lose water and the frothed or foamed coatings collapse (i.e., coalesce and eliminate bubbles from the froth or foam). Continuous thermal exposure cross-links the elastomeric resins to a tough coating which provides an economical, thin exposed coating which generally conforms to the irregularities of the initial fibrous batt. The resulting relatively rough and uneven surface is objectionable in ventilation duct liners for several reasons. Airborne dust and particles tend to accumulate in the surface irregularities. Viri, bacteria and pathogens tend to accumulate in the irregularities of the surface. Irregular surfaces increase the frictional resistance of air moving through the lined ducts. Smoother surfaces tend to reduce the frictional resistance of the lined ducts to the flow of air.

Cross-linkable aqueous emulsions are available from several sources. A cross-linkable emulsion contains monomers and polymers, some of which have multiple polymerizable sites to effect cross-linking to a three-dimensional polymer. Aqueous acrylic emulsions are preferred. Any cross-linkable aqueous acrylic emulsion which is not a pressure-sensitive adhesive is acceptable.

U.S. patent No. 3,607,341, issued September 21, 1971, and entitled "Process for Producing a Coated Substrate" discloses a coated substrate which is produced by foaming an aqueous emulsion polymerized latex composition, applying the foam directly to the substrate, crushing the partially dried and uncured foam, and thereafter drying and curing the resultant crushed foam.

U.S. patent No. 3,936,254; issued February 3, 1976, and entitled "Apparatus for the Continuous Manufacture of Polymer Plates" discloses a process for making polymer plates that include a uniformly thick layer of a resin composition adhering to a base plate. The process includes the steps of applying a resin composition to a base plate, coating the surface of the resin composition with a sheet of thermoplastic material, rolling the covered resin composition and the base plate with rollers, cooling the resultant plate, peeling off the sheet material and then drying the resultant polymer plate.

U.S. patent No. 4,618,530, issued October 21, 1986, and entitled "Process for the Preparation of a Composite Mat" discloses a composite mat having a cured elastomeric polyvinylchloride coating over one surface of the mat. French patent No. 2,518,139 discloses an apparatus having a support means to support a fabric, a continuous belt to engage an exposed surface of a coating on the fabric, means to heat the continuous belt, means to advance the fabric and drive means to drive the continuous belt.

### Statement Of The Present Invention

According to the present invention, an improved elastomeric coated fibrous batt has been developed which provides a relatively smooth surface which is dramatically tougher than similar surfaces manufactured from the same coating composition on the same fibrous batt without employing this invention.

The invention is an improvement in the known fibrous batt-coating procedure which involves applying a foamed or frothed cross-linkable elastomeric aqueous emulsion composition to one surface of a fibrous batt and thereafter heating the batt with the applied coating in order to drive off the aqueous carrier for the emulsion, to collapse the foam or froth, and to cure the cross-linkable elastomer. Such coatings are known to possess as additives: fire-retardant agents, bactericides, fungicides, pigments, rheology modifiers, curing catalysts and other additives.

According to the present invention, the frothed or foamed cross-linkable elastomeric aqueous emulsion coating is contacted with the heated ironing surface prior to drying or curing of the coating composition. The ironing surface dewaters and cures a film of the coating composition which is in contact with the ironing surface without dewatering and curing the entire coating composition. The ironing surface compresses the coating composition whereby the exposed film conforms generally to the configuration of the smooth ironing surface. The ironing surface contact is achieved without creating shear stress between the ironing surface and the coating composition. Preferably the batt which is being coated advances at a uniform speed through a coating line; the ironing surface is a continuous smooth belt having a linear velocity corresponding to the velocity of the batt in the coating line. The coating composition develops substantial cohesive strength which facilitates separation of the ironing surface from the coating. Mold release agents may be applied to the ironing surface to facilitate the separation of the cured coating film and the ironing surface.

A preferred ironing surface is a continuous belt of smooth, heat transfer material such as stainless steel. The belt is driven between at least one pair of rollers which are mounted in a frame which can be adjusted to provide appropriate compression of the coating composition to develop the desired smooth surface. After the cured surface film is developed, the batt and coating composition are heated to drive off the aqueous vehicle from the composition and to cure the cross-linkable composition.

The resulting coated fibrous batt has a significantly smoother surface in appearance and in touch than previous coated fibrous batts. The number and size of the surface irregularities in the resulting coated fibrous batt are significantly reduced.

In addition, the coating of the fibrous batt is dramatically tougher than the coating of prior art coated fibrous batts.

Accordingly it is an object of the present invention to provide a method for producing smooth, tough elastomeric coatings over one surface of a fibrous batt.

It is another object of the present invention to provide apparatus for producing smooth elastomeric coated fibrous batts.

It is a further object of the invention to produce a new smooth-surfaced, coated fibrous batt, substantially free of exposed fibers and substantially free of surface irregularities.

### Description Of The Drawings

FIGURE 1 is an isometric view of a typical coated fibrous batt according to the prior art.

FIGURE 2 is an isometric sketch similar to FIGURE 1 showing the coated fibrous batt resulting from the practice of the method of the invention.

FIGURE 3 is a fragmentary perspective illustration of a typical air distribution duct lined with coated fibrous batts.

FIGURE 4 is a schematic illustration of one embodiment of apparatus for practicing the invention.

FIGURE 5 is a perspective illustration of the ironing surface portion of the apparatus shown in FIGURE 4.

FIGURE 6 is a fragmentary sectional view of a fibrous batt with uncured coating.

FIGURE 7 is a fragmentary sectional view of a fibrous batt with a coating engaged with a heated ironing surface.

FIGURE 8 is an enlarged sectional view of the circled section of FIGURE 7.

FIGURE 9 is an enlarged fragmentary sectional view of a coated fibrous batt after the coating has been ironed and cured.

FIGURE 10 is a schematic illustration of another embodiment of apparatus for practicing the invention.

### Description Of The Preferred Embodiments

Fibrous batts are customarily fabricated by forming and shaping randomly deposited glass fibers into a generally rectangular cross-section in continuous lengths. Typically such batts are from 1.27 cm (1/2 inch) nominal thickness to about 5.08 cm (2 inches) nominal thickness. The glass fibers customarily are coated with thermoset resins by the batt manufacturer or the fiber manufacturer prior to shipping the batts. When heated, the resins which are heat-cured to provide relative rigidity and structural integrity to the resulting batts. Such batts are typically used as thermal insulation and acoustical insulation materials. Such batts are available in widths from about 0,61-2,44m (2 feet to 8 feet). The continuous batts are normally cut-to-length as desired, typically about 7.62 m (25 feet), 15.24 m (50 feet), 30.48 m (100 feet).

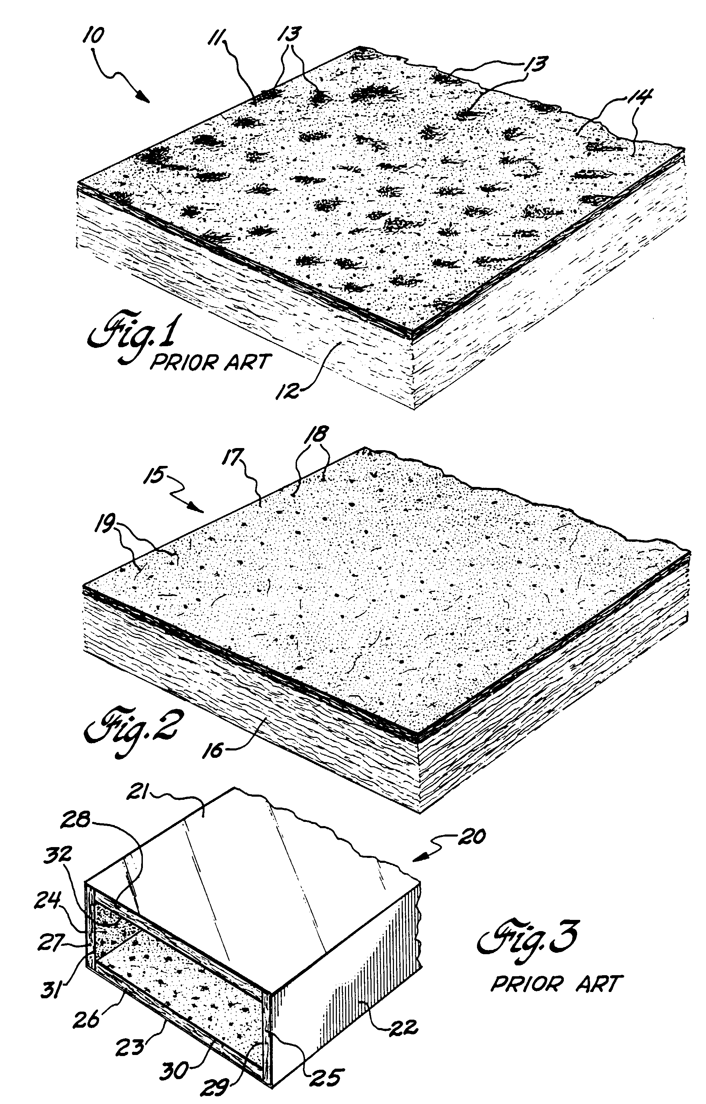

As shown in FIGURE 1, a prior art glass fiber batt 10 typically has an elastomer coating 11 over one surface of the batt 12. The average thickness of the coating 11 is from 0.0196 mm to 0.118 mm (5 to 30 mils). As seen in FIGURE 1, the prior art coatings 11 generally follow the irregular contour of the glass fiber batt 12 and present depression 13 and exposed glass fibers 14 which contribute to the irregularity of the exposed surface of the coating 11.

By comparison, a coated batt 15 includes a glass fiber batt 16 and a cured coating 17. It will be observed that the coating 17 has fewer and smaller depressions 18 and fewer exposed fibers 19.

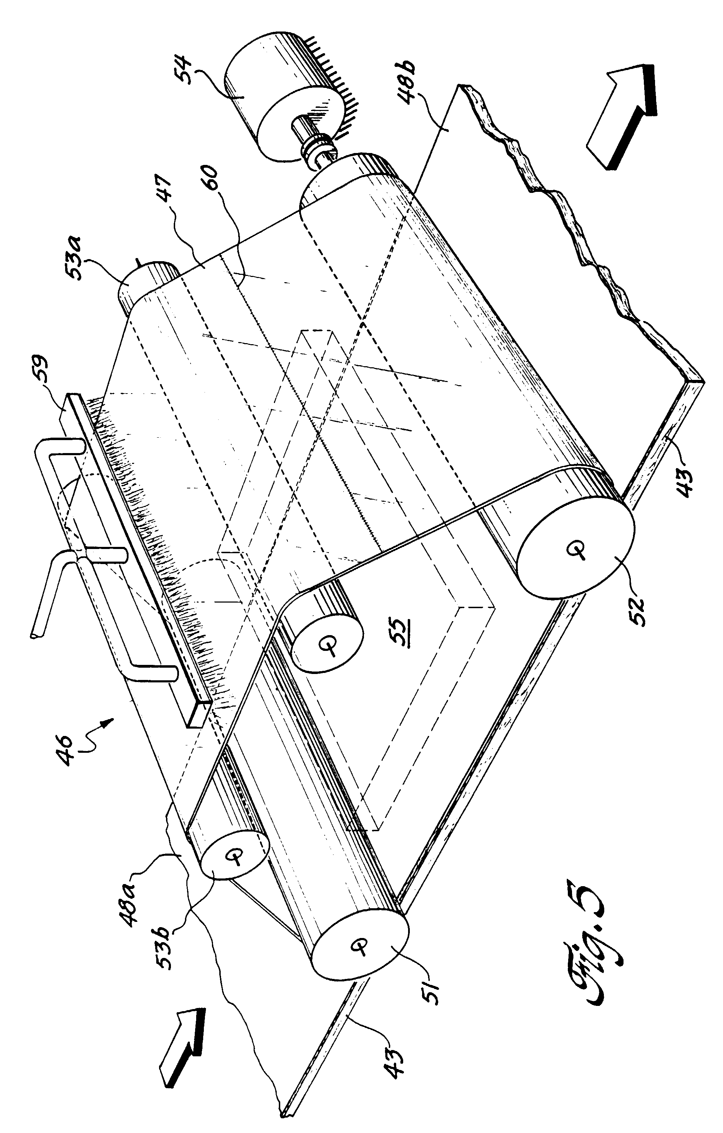

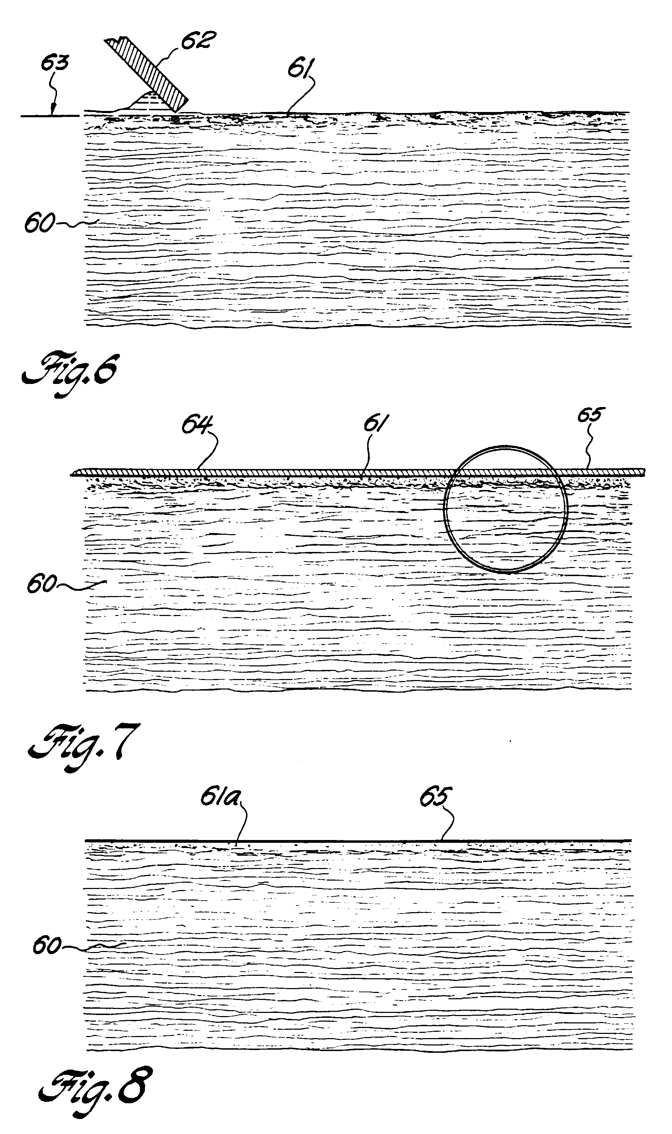

Typically coated fibrous batts are employed as liners in ventilation ducting as illustrated in FIGURE 3, a ventilation duct 20 normally has a rectangular cross-section formed from metal surfaces 21, 22, 23, 24. The duct is lined with coated glass fibrous batts 25, 26, 27, 28. The batts 25, 26, 27, 28 are secured to the inner duct walls by suitable means, such as adhesives (not shown), fasteners or brackets. The batts are coated over an exposed surface prior to being mounted in the duct 20. The batt coatings 29, 30, 31, 32 secure the glass fibers in the respective batts and retard any transport of glass fibers through the duct. The coatings 29, 30, 31, 32 have a generally irregular surface in the prior art (See FIGURE 1.) corresponding to the irregular surface of the glass batts which results in significant frictional resistance to the flow of air through the duct 20. The irregularities of the coated surfaces become pockets for accumulation of dust, viri, bacteria and pathogens.

The smooth, tough coatings of this invention provide substantially smoother surfaces and consequent lower frictional resistance to the flow of air through the duct 20 and substantially reduce surface irregularities which might function as collectors of dust, viri, bacteria and pathogens.

Because the coatings of the present invention are substantially tougher than those of the prior art, the opportunities for tearing, puncturing or other destruction of the coating are reduced during packaging, shipment, and handling by installers.

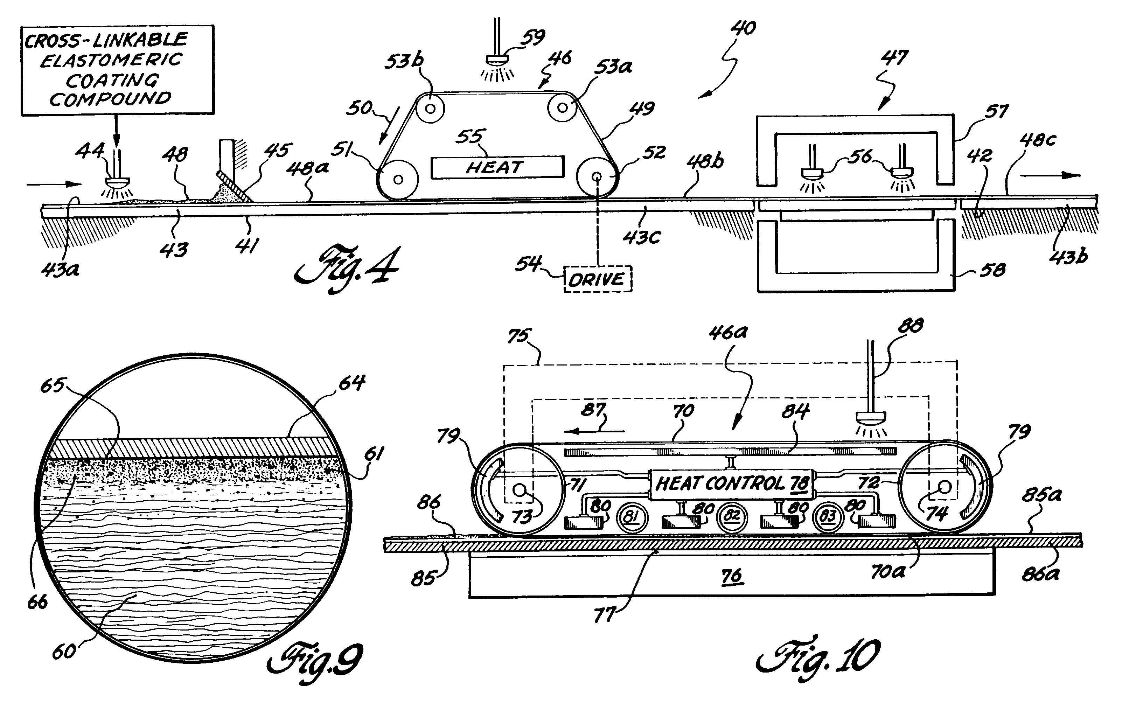

Referring to FIGURE 4 there is illustrated a schematic production line for the coated fibrous batts of this invention.

The assembly line 40 includes level tables 41, 42 which guide a fibrous batt 43 sequentially through a costing applicator 44, a doctor blade 45 or similar thickness control device; an ironing apparatus 46 for a coated surface, and a heating chamber 47.

The continuous batt 43 of glass fibers moves from left to right from an uncoated state 43a to a final coated state 43b. A coating in the form of a froth or foam 48 is applied to the batt 43 from a coating applicator 44. The coating 48 is shaped into a uniform level coating by means of a doctor blade 45 or similar leveling device, e.g., a coating roller. The level coating 48a passes in contact with the heated ironing apparatus 46, more fully illustrated in FIGURE 5, which comprises a moving continuous stainless steel belt 49 moving in the direction indicated by the arrow 50 between a pair of rollers 51, 52. A heat source 55 supplies heat to the continuous belt 49 which is transmitted to the coating 48 in contact with the smooth outer surface of the belt 49. The heat serves to drive moisture from a film of the coating engaging the belt 49 and also achieves a cross-linking cure of the film of coating. As the film 48b advances beyond the ironing station 46, the coating has an outer relatively smooth, partially-cured film and is essentially uncured between that film and the fibrous batt 43b. The heating source 55 may be a gas burner, electrical radiant heater, or any other suitable heater which will cause the temperature of the continuous belt 49 to reach the desired level for drying and curing the exposed outer film of the coating 48a.

The coated fibrous pad 43c with the cured exposed film passes through a heating zone 47 positioned between the table 41 and the table 42. Within the heating zone 47, a heat source 56 maintains an oven temperature sufficient to drive off substantially all of the moisture in the coating 48b and to effect a complete cure of the elastomer in the coating 48c. The heating source 56 may comprise infra-red lamps or a radiant gas burner, or other appropriate devices. The heating zone 47 is preferably lined with thermal insulation 57, 58 for thermal efficiency.

The coated fibrous batt 43b leaving the heating zone 47 has a relatively smooth, tough, cured, dried elastomeric coating over an exposed surface. The coated batt 43b is normally cut to length and packaged for shipment.

As indicated in FIGURE 5, the ironing belt 49 is supported by rollers 51, 52, 53a, 53b. The continuous belt 49 preferably is a stainless steel belt. At least one of the rollers 51, 52, 53a, 53b is moveable horizontally and/or vertically to adjust the tension in the belt 49. All of the rollers 51, 52, 53a, 53b are secured to a frame (not shown in FIGURE 5) which can be moved to provide more or less compressive stress against the coating 48a. If desired, appropriate means, e.g., a spray 59, may be provided to spray or otherwise apply a mold release liquid to the outer surface of the belt 49.

The continuous belt 49 may contain a transverse weld 60. If the total length of the belt 49 corresponds to the standard cut-to-length dimension of the resulting coated fibrous batts, then the cut-to-length shear (not shown) may conveniently coincide with the impression of the weld 60 on the coating 48b, 48c.

It should be noted that the velocity of the belt 49 should coincide with the velocity of the fibrous pad 43 to avoid establishing shear stresses between the belt 49 and the coating 48a.

In a preferred embodiment the belt 49 has a smooth outer surface to generate a smooth surface 48b in the product coated fibrous batts. It is possible to provide a pattern in the belt 49 to produce a corresponding pattern on the coated surface of the coated fibrous batt 48c, for example, a diamond pattern, parallel lines, a decorative random pattern and the like.

The coated fibrous batts, prepared in accordance with this invention, have a smoother surface than corresponding coated batts prepared from the same coating composition on the same uncoated fibrous batts at the same application concentration and curing conditions. In addition the coatings prepared in accordance with this invention are dramatically tougher. There is no known standard means for measuring "toughness" of a coating on a fibrous batt. A subjective comparison can be established by attempting to poke a finger or a pencil through the coating into the random glass fibers forming the batt. According to such subjective tests, the coating prepared according to the present invention is tougher.

A typical coating composition comprises an aqueous acrylic emulsion including a catalyst to initiate cross-linking of the composition in response to applied heat. The coating composition also may include pigments, inert fillers, fire retardant particulate additives, bactericides, fungicides, biocides, rheology modifiers and curing catalysts. Typically the temperature of the ironing belt 49 is 204-315° Celsius (400-600° Fahrenheit). Typically the curing temperature in the oven 47 is 204-371° Celsius (400-700° Fahrenheit).

A typical froth coating used for coating glass fiber batts is:

| | Weight Percent |
|---|---|
| Aqueous Acrylic Latex Emulsion (Not-Pressure-Sensitive) | 20-90 |
| Curing Catalyst | 0.1-1:0 |
| Froth Aids | 1-10 |
| Foam Stabilizer | 1-5 |
| Mineral Filler, including Flame retardants | 0-60 |
| Color Pigments | 0-5 |
| Rheology Control Thickener | 1-6 |
| Fungicide | 0.1-0.3 |

Final solids content is from 20 to 85 weight percent. Operating viscosity is 500 to 12,000 centipoise.

Froth density is measured as a "cup weight", i.e., the weight of frothed coating composition in a 0,47 liter (16-ounce) paper cup, level full. Cup weight of 55 to 255 grams is typical.

The present process and product can be comprehended more clearly by reference to FIGURES 6, 7, 8, and 9 wherein a fibrous batt 60 receives a coating 61 of foamed or frothed cross-linkable elastomeric aqueous emulsion which is leveled to a more or less uniform thickness by means of a doctor blade 62 as shown in FIGURE 6. As applied, the foamed or frothed coating 61 has a thickness of 0.0196 mm to 0.118 mm (5 to 30 mils), preferably about 0,0392 mm (10 mils). It will be observed from FIGURE 6 that the applied coating 61 tends to follow the irregularities of the surface 63 of the fibrous batt 60, i.e., the coating 61 tends to penetrate downwardly into interstices between fibers and tends to rise above any fiber which extends above the general level 63 of the fibrous batt 60.

In a prior art embodiment (not shown) the applied foamed or frothed coating 61 is directly heated in an oven which causes collapse of the foam or froth, elimination of the water content of the coating and cure of the elastomer as a thin film which follows the contours of the upper surface 63 of the batt 60.

According to this invention, the applied frothed or foamed coating 61 (FIGURE 7) is engaged with a heated ironing surface 64 which creates a cured exposed film 65 which is dewatered and free of the foam or froth bubbles. The film 65 is essentially flat, corresponding to the configuration of the hot ironing surface 64, presenting a tough, difficult to penetrate-or-tear elastomeric skin. When the coated batt subsequently is heated in an oven, the final product (FIGURES 8, 9) has a relatively smooth exposed film 65 and the remainder of the coating 61a is dried, substantially freed of froth or foam bubbles and has penetrated into the interstices of the fibrous batt as indicated at 66 to achieve a good bond with the fibrous batt 60. The product presents a smooth, tough exposed surface 65 which improves the performance of the coated batt in thermal and acoustical insulation installations.

An alternative embodiment of the ironing apparatus 46a is illustrated in FIGURE 10. A continuous belt 70 is positioned on two rollers 71, 72 which rotate about central axles 73, 74 which are driven by drive means, not illustrated in FIGURE 10.

The continuous ironing belt 70 has the same properties and characteristics as the ironing belt 49 described in connection with FIGURE 4. The ironing apparatus 46a is secured to a frame 75 which includes means, not shown, for raising, lowering and holding the ironing apparatus 46a with respect to a support table 76 having a flat upper surface 77. Means for heating the continuous belt 70 are provided including a heat source 78 which controls delivery of heat to heat release devices 79, 80.

Intermediate rollers 81, 82, 83 rotate about central axes (not shown). The continuous belt 70a is maintained in a generally flat surface. The rollers 81, 82, 83 are supported by the frame 75 by appropriate support means, not shown in FIGURE 10. An additional heat release element 84 may be provided for the continuous belt 70 remote from the rollers 81, 82, 83. In operation, the apparatus of FIGURE 10 is positioned above a continuously advancing fibrous batt 85 which has on its upper surface a coating 86 of foamed or frothed cross-linkable coating composition. The continuous belt 70 advances in the direction indicated by the arrow 87 at the same velocity as the pad 85 and coating 86. The heated, continuous belt 70a contacts the upper surface of the coating composition 86 and provides a dried, tough, partially cured skin over the surface of the coating composition 86 which engages the continuous belt 70a.

The pad 85a and partially cured coating 86a separate from the continuous belt 70 at the roller 72 and proceed to a heating chamber, similar to the heating chamber 47 of FIGURE 4, for drying and final cure of the coating of the composition 89a. The heating elements 79, 80, 87 may be gas burning radiant heat panels, may be infrared lamps, may be blocks of thermally conductive metals such as copper, copper alloys, aluminum, aluminum alloys, steel alloys and the like which will transmit heat readily to a continuous belt 70.

The apparatus of FIGURE 10 differs from that illustrated in FIGURE 4 primarily by having larger drive rolls 71, 72 and having intermediate rolls 81, 82, 83. Similar heat sources may be applied in the ironing apparatus 46 (FIGURE 4) or 46a (FIGURE 10). The distance between the axles 73, 74 is preferably from 1.2 to 3.05 m (4 to 10 feet). The diameter of the rollers 71, 72 is preferably 20.3 to 76.2 cm (8 to 30 inches). If desired, an appropriate mold release agent may be applied to the outer surface of the continuous belt 70 from an appropriate distributor such as one or more spray nozzles 88.

## Claims

1. A method for developing a smooth, tough, elastomeric surface coating over one surface of a batt of fibrous insulation, comprising:
a. applying a foamed or frothed cross-linkable elastomeric aqueous emulsion coating composition to and uniformly across one surface of a batt of fibrous insulation to form a coating;
b. engaging a hot, smooth ironing surface with said coating to dry and compress said coating and to develop a cured, smooth surface film over the exposed area of said coating;
c. separating said ironing surface from engagement with said coating and thereafter heating said batt and said coating until said coating is dried and cured; and
d. recovering said batt having a smooth, tough, elastomeric cross-linked coating over one surface of said batt.

2. The method of claim 1 wherein said cross-linkable elastomeric coating composition is a water based, flame retardant composition containing an acrylic latex.

3. The method of claim 1 wherein said cross-linkable elastomeric coating composition is applied to said batt in the form of a forth or foam having a cup-weight of 55 to 255 grams.

4. The method of claim 1 wherein said coating is uniformly applied across said one surface of said batt by means of a doctor blade.

5. The method of claim 4 wherein said ironing surface is a moving band and said band is continuously moved while engaged with said coating without developing any shear stress between said ironing surface and said coating.

6. The method of claim 5 wherein said batt is a continuous batt which is advanced at a uniform velocity while said cross-linkable elastomeric aqueous emulsion coating composition is applied by said doctor blade, said coating is engaged by said ironing surface, and said batt and coating are heated to dry and cure said coating in a heated chamber.

7. Apparatus for curing a surface film of a cross-linkable elastomeric aqueous emulsion coating composition applied to a surface of a fibrous batt wherein said coating penetrates said batt and conforms to the surface of said batt, said apparatus including:
a. a support means having an upper surface to support said batt;
b. a continuous belt, having a temperature between 204° and 315° Celsius (400° and 600° Fahrenheit), to engage an exposed surface of said coating to drive off moisture from said exposed surface of said coating, to compress said exposed surface of said coating and to compress said batt against said support means;
c. means to heat said continuous belt to said temperature;
d. advancing means to advance said batt along said support means at a velocity;
e. drive means to drive said continuous belt at the same velocity as said batt, whereby there is no shear stress between said coating and said continuous belt and a film of said coating in contact with said continuous belt is heated by said continuous belt to drive off moisture from the film and to cure the cross-linkable emulsion of said film to a tough, cured state with a surface of said film conforming to an ironing surface of said continuous belt; and
f. a heating means downstream of said continuous belt for effecting a cure of that portion of said coating intermediate said film and said batt; said heating means having a temperature between 204° and 371° Celsius (400° and 700° Fahrenheit) which is sufficient to drive off moisture in said portion of said coating intermediate said film and said batt to complete a cure of said coating.

8. The apparatus of claim 7 including a means for applying a mold release agent to the surface of said continuous belt which engages said coating.

## Patentansprüche

1. Verfahren zur Entwicklung einer glatten zähen elastomeren Oberflächenbeschichtung über einer Fläche eines Vlieses aus Faserisolierung, umfassend:
a. Aufbringen einer geschäumten oder zum Schäumen gebrachten vernetzbaren elastomeren wäßrigen Emulsionsbeschichtungszusammensetzung auf und gleichmäßig über eine Fläche des Vlieses aus der Faserisolierung unter Bildung einer Beschichtung;
b. enges Anschmiegen einer heißen glatten Bügelfläche an die Beschichtung, um die Beschichtung zu trocknen und zusammenzupressen und um einen gehärteten glatten Oberflächenfilm über dem exponierten Bereich der Beschichtung zu entwickeln;
c. Lösen der Bügelfläche aus der Anschmiegung an die Beschichtung und anschließend Erhitzen des Vlieses und der Beschichtung, bis die Beschichtung trocken und gehärtet ist; und
d. Gewinnen des Vlieses, das eine glatte zähe elastomere vernetzte Beschichtung auf einer Fläche des Vlieses besitzt.

2. Verfahren nach Anspruch 1, bei dem die vernetzbare elastomere Beschichtungszusammensetzung eine Wasserbasis-Flammverzögererzusammensetzung ist, die einen Acryllatex enthält.

3. Verfahren nach Anspruch 1, bei dem die vernetzbare elastomere Beschichtungszusammensetzung auf das Vlies in Form eines Schäumers oder Schaums aufgebracht wird, der ein Prüfbechergewicht von 55 bis 255 g besitzt.

4. Verfahren nach Anspruch 1, bei dem die Beschichtung gleichmäßig über eine Fläche des Vlieses mittels einer Rakel aufgebracht wird.

5. Verfahren nach Anspruch 4, bei dem die Bügelfläche ein sich bewegendes Band ist und das Band kontinuierlich bewegt wird, während es sich in eng an die Beschichtung anschmiegt, ohne jegliche Entwicklung von Scherbeanspruchung zwischen Bügelfläche und Beschichtung.

6. Verfahren nach Anspruch 5, bei dem das Vlies ein Endlosvlies ist, welches mit gleichmäßiger Geschwindigkeit weiterbefördert wird, während die vernetzbare elastomere wäßrige Emulsionsbeschichtungszusammensetzung mit der Rakel aufgebracht wird, wobei die Beschichtung von der Bügelfläche schmiegsam kontaktiert wird und Vlies und Beschichtung erhitzt werden, um die Beschichtung in einer geheizten Kammer zu trocknen und zu härten.

7. Apparatur zum Härten eines Oberflächenfilmes aus einer vernetzbaren elastomeren wäßrigen Emulsionsbeschichtungszusammensetzung, die auf eine Oberfläche eines Faservlieses aufgebracht wird, in der die Beschichtung das Vlies durchdringt und sich der Oberfläche des Vlieses anpaßt, wobei die Apparatur umfaßt:
a. ein Trägermittel, welches eine obere Fläche zum Tragen des Vlieses besitzt;
b. ein Endlosband, welches eine Temperatur zwischen 204 ° und 315 °C (400 ° und 600 Fahrenheit) aufweist, um sich an eine exponierte Fläche der Beschichtung anzuschmiegen, um die Feuchtigkeit von der exponierten Fläche der Beschichtung zu vertreiben, die exponierte Fläche der Beschichtung zusammenzupressen und um das Vlies gegen das Trägermittel zu pressen;
c. Mittel zum Erhitzen des Endlosbandes auf die Temperatur;
d. Beförderungsmittel zum Weiterbefördern des Vlieses entlang des Trägermittels mit einer Geschwindigkeit;
e. Antriebsmittel zum Antreiben des Endlosbandes bei derselben Geschwindigkeit wie das Vlies, wobei keine Scherbeanspruchung zwischen Beschichtung und Endlosband auftritt, und ein Film aus der Beschichtung in Kontakt mit dem Endlosband durch das Endlosband erhitzt wird, um die Feuchtigkeit von dem Film zu vertreiben und um die vernetzbare Emulsion des Filmes zu einem zähen gehärteten Zustand zu härten, wobei eine Fläche des Filmes sich an eine Bügelfläche des Endlosbandes anpaßt; und
f. ein Heizmittel nach dem Endlosband zum Bewirken einer Härtung desjenigen Teils der Beschichtung zwischen Film und Vlies, wobei das Heizmittel eine Temperatur zwischen 204 °C und 371 °C (400 ° und 700 ° Fahrenheit) aufweist, die ausreicht, um die Feuchtigkeit in diesem Teil der Beschichtung zwischen Film und Vlies zu vertreiben, um eine Härtung der Beschichtung zu vervollständigen.

8. Apparatur nach Anspruch 7, die ein Mittel zum Aufbringen eines Formtrennmittels auf die Oberfläche des Endlosbandes umfaßt, welches sich eng an die Beschichtung anschmiegt.

## Revendications

1. Procédé pour former un revêtement de surface élastomère lisse, résistant sur une face d'un panneau d'isolation fibreux, comprenant :
a. le fait d'appliquer une composition de revêtement en émulsion aqueuse élastomère réticulable sous forme de mousse ou d'écume sur, et uniformément en travers d'une face d'un panneau d'isolation fibreux pour former un revêtement ;
b. le fait de mettre en contact une surface de repassage chaude, lisse avec ce revêtement pour sécher et comprimer ce revêtement et pour former un film de surface durci, lisse sur la région exposée de ce revêtement ;
c. le fait de détacher cette surface de repassage de ce revêtement, puis de chauffer ce panneau et ce revêtement jusqu'à ce que ce revêtement soit séché et durci ; et
d. le fait de récupérer ce panneau ayant un revêtement réticulé élastomère lisse, résistant sur une face de ce panneau.

2. Procédé selon la revendication 1, dans lequel cette composition de revêtement élastomère réticulable est une composition ignifuge à base d'eau contenant un latex acrylique.

3. Procédé selon la revendication 1, dans lequel cette composition de revêtement élastomère réticulable est appliquée sur ce panneau sous la forme d'une écume ou d'une mousse ayant un poids au gobelet de 55 à 255 g.

4. Procédé selon la revendication 1, dans lequel ce revêtement est uniformément appliqué en travers de ladite face de ce panneau au moyen d'une lame-docteur.

5. Procédé selon la revendication 4, dans lequel cette surface de repassage est une bande mobile et cette bande est déplacée en continu alors qu'elle est contact avec ce revêtement sans donner lieu à aucune contrainte de cisaillement entre cette surface de repassage et ce revêtement.

6. Procédé selon la revendication 5, dans lequel ce panneau est un panneau continu que l'on fait avancer à une vitesse uniforme tandis que cette composition de revêtement en émulsion aqueuse élastomère réticulable est appliquée par cette lame-docteur, ce revêtement est mis en contact avec cette surface de repassage, et ce panneau et ce revêtement sont chauffés pour sécher et durcir ce revêtement dans une chambre chauffée.

7. Appareil pour durcir un film de surface d'une composition de revêtement en émulsion aqueuse élastomère réticulable appliquée sur une face d'un panneau fibreux, dans lequel ce revêtement pénètre dans ce panneau et s'adapte à la surface de ce panneau, cet appareil comprenant :
a. un moyen de support ayant une face supérieure pour soutenir ce panneau ;
b. une courroie continue ayant une température comprise entre 204 ° et 315 ° Celsius (entre 400 ° et 600 ° Fahrenheit), pour venir au contact d'une face exposée de ce revêtement pour chasser l'humidité de cette face exposée de ce revêtement, pour comprimer cette face exposée de ce revêtement et pour comprimer ce panneau contre ce moyen de support ;
c. des moyens pour chauffer cette courroie continue à cette température ;
d. des moyens pour faire avancer ce panneau le long de ce moyen de support à une certaine vitesse ;
e. des moyens d'entraînement pour entraîner cette courroie continue à la même vitesse que ce panneau, de sorte qu'il ne se produise pas de contrainte de cisaillement entre ce revêtement et cette courroie continue, et un film de ce revêtement en contact avec cette courroie continue est chauffé par cette courroie continue pour chasser l'humidité du film et pour durcir l'émulsion réticulable de ce film dans un état résistant, durci, une face de ce film s'adaptant à une surface de repassage de cette courroie continue ; et
f. un moyen de chauffage en aval de cette courroie continue pour effectuer un durcissement de cette partie de ce revêtement intermédiaire entre ce film et ce panneau ; ce moyen de chauffage ayant une température comprise entre 204 ° et 371 °Celsius (entre 400 ° et 700 ° Fahrenheit), qui est suffisante pour chasser l'humidité dans cette partie du revêtement intermédiaire entre ce film et ce panneau pour terminer le durcissement de ce revêtement.

8. Appareil selon la revendication 7, comprenant un moyen pour appliquer un agent de démoulage sur la surface de cette courroie continue qui vient au contact de ce revêtement.
